# EUROPEAN PATENT APPLICATION

(11) **EP 4 838 455 A1**
(43) Date of publication of application: **11.11.2026**
(21) Application number: 25300059.0
(22) Date of filing: 09.05.2025
(51) Int. Cl.: G06T 3/4076

(54) **IMAGE PROCESSING APPARATUS AND METHOD FOR UPSCALING DEPTH INFORMATION**

(71) Applicant: Sony Interactive Entertainment Inc., Tokyo 108-0075 (JP)
(72) Inventor: Dr Andreopoulos, Ioannis, London W1F 7LP (GB); Conde, Marcos, London W1F 7LP (GB)
(74) Representative: Gill Jennings & Every LLP

(57) **Abstract**

There is provided an image processing device and method for upscaling and/or transmitting depth information for an image. The device comprises a reception unit to obtain an image of a scene and a low-resolution depth map comprising depth information for the scene. An upscaling unit performs an upscaling process on the low-resolution depth map, based on the image, to generate a high-resolution depth map comprising depth information and having a higher resolution than the low-resolution depth map. Another device comprises a frame generation unit to generate an image of a scene and a high-resolution depth map comprising depth information for the scene. A downscaling unit performs a downscaling process on the high-resolution depth map to generate a low-resolution depth map comprising depth information and having a lower resolution than the high-resolution depth map. A transmission unit transmits the low-resolution depth map and the image over a network.

## Description

### Field of the invention

The present invention relates to an image processing method and system.

### Background

Some image content may include depth information which relates to the distance of the objects in the image from the viewpoint. This depth information may be stored in the form of a depth map, where each pixel of the depth map contains depth information for an object in a corresponding image pixel. Such depth information is particularly useful for use in 3-dimensional computer graphics. In particular, more detailed depth information facilitates the generation of higher quality computer-generated images.

The present invention seeks to improve the use of depth maps.

### SUMMARY OF THE INVENTION

Various aspects of and features of the present invention are defined in the appended claims and within the text of the accompanying description and include at least:
- In a first aspect, an image processing device for upscaling depth information for an image in accordance with claim 1;
- In a second aspect, an image processing method for upscaling depth information for an image in accordance with claim 10;
- In a third aspect, an image processing device for transmitting depth information for an image in accordance with claim 11; and
- In a fourth aspect, an image processing method for transmitting depth information for an image in accordance with claim 14.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram illustrating an example of an entertainment device;
- Figure 2 is a schematic diagram illustrating an image processing device according to some embodiments;
- Figure 3 is a sequence of steps illustrating an example of upscaling depth information;
- Figure 4 is a schematic diagram illustrating an image processing device according to some embodiments;
- Figure 5 is a sequence of steps illustrating an example of transmitting depth information;
- Figures 6A and 6B illustrate a signalling sequence for transmitting depth information and upscaling depth information.

### DESCRIPTION OF THE EMBODIMENTS

An image processing device and method for upscaling depth information for an image and/or transmitting depth information for an image are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

In an example embodiment of the present invention, a suitable system and/or platform for implementing the methods and techniques herein may be an entertainment device.

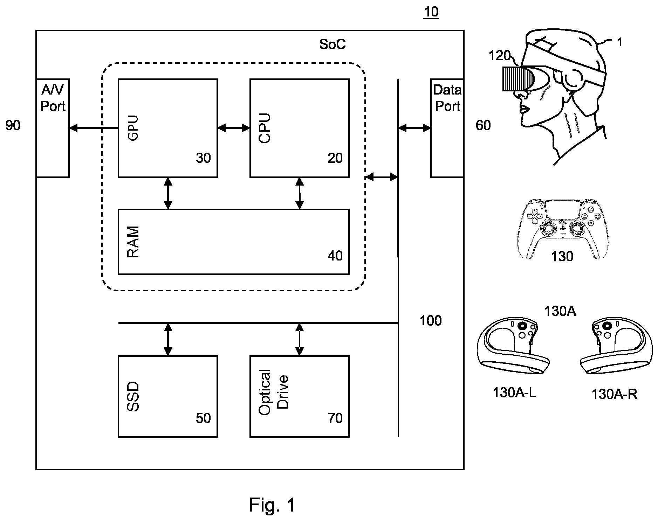

Referring now to the drawings, wherein like reference numerals designate identical or corresponding parts, Figure 1 shows an example of an entertainment device 10 which may be a computer or video game console, for example.

The entertainment device 10 comprises a central processor 20. The central processor 20 may be a single or multi core processor. The entertainment device also comprises a graphical processing unit or GPU 30. The GPU can be physically separate to the CPU, or integrated with the CPU as a system on a chip (SoC).

The GPU, optionally in conjunction with the CPU, may process data and generate video images (image data) and optionally audio for output via an AV output. Optionally, the audio may be generated in conjunction with or instead by an audio processor (not shown).

The video and optionally the audio may be presented to a television or other similar device. Where supported by the television, the video may be stereoscopic. The audio may be presented to a home cinema system in one of a number of formats such as stereo, 5.1 surround sound or 7.1 surround sound. Video and audio may likewise be presented to a head mounted display unit 120 worn by a user 1.

The entertainment device also comprises RAM 40, and may have separate RAM for each of the CPU and GPU, and/or may have shared RAM. The or each RAM can be physically separate, or integrated as part of an SoC. Further storage is provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90, or through one or more of the wired or wireless data ports 60.

An example of a device for displaying images output by the entertainment device is the head mounted display 'HMD' 120 worn by the user 1. The images output by the entertainment device may be displayed using various other devices - e.g. using a conventional television display connected to A/V ports 90.

Where components are not integrated, they may be connected as appropriate either by a dedicated data link or via a bus 100.

Interaction with the device is typically provided using one or more handheld controllers 130, 130A and/or one or more VR controllers 130A-L,R in the case of the HMD. The user typically interacts with the system, and any content displayed by, or virtual environment rendered by the system, by providing inputs via the handheld controllers 130, 130A. For example, when playing a game, the user may navigate around the game virtual environment by providing inputs using the handheld controllers 130, 130A.

In embodiments of the present disclosure, the entertainment device 10 generates one or more images of a virtual environment for display (e.g. via a television or the HMD 120).

Figure 1 therefore provides an example of a data processing apparatus suitable for executing an application such as a video game and generating images for the video game for display. Images may be output via a display device such as a television or other similar monitor and/or an HMD (e.g. HMD 120). More generally, user inputs can be received by the data processing apparatus and an instance of a video game can be executed accordingly with images being rendered for display to the user.

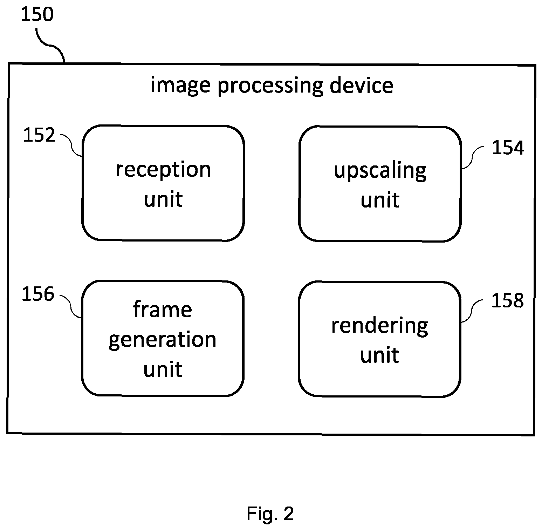

Embodiments of the present disclosure relate to upscaling a depth map for a scene. The image may be, in some examples, an image frame for content such as a video game running on the entertainment device 10 in Figure 1. Figure 2 illustrates an image processing device 150 according to various embodiments described below. The image processing device 150 comprises several functional units, any one or more of which may be provided, for example by the CPU 20 and/or GPU 30 in the entertainment device 10. The image processing device 150 comprises a reception unit 152 for obtaining an image of a scene and a depth map comprising depth information for the scene. In some examples, the depth map may be obtained by generating it 'locally' (e.g. by the frame generation unit 156), or by receiving the depth map over a network.

In accordance with the present disclosure, the depth map comprising the depth information for the scene has a low resolution, and in particular a low spatial resolution. This is to mean that the pixels of the depth map are larger (e.g. in the horizontal and/or vertical direction) than they would be at a higher resolution. Therefore, a low-resolution (LR) depth map may therefore contain imprecise depth information for the edges of objects in the image, e.g. such that multiple objects at different depths are covered by single pixel. A LR depth map may be preferred in some scenarios due to being less computationally intensive to generate or due to consuming less bandwidth when transmitted over a network. However, when it is then used for subsequent image processing, e.g. applying visual effects to generate a display frame to display on a screen or on the HMD 120, the image quality may be deteriorated.

Hence, the image processing device includes an upscaling unit 154 configured to perform an upscaling process on the LR depth map based on the image. For example, a LR depth map may have a resolution of 720x1280 pixels. Some upscaling processes may use the image as a guide to recover details in the LR depth map.

Reference-based super-resolution may be used for upscaling LR images by using a HR image with similar contents. In some examples of the present disclosure, reference-based super-resolution may also be used to upscale the LR depth map using a HR image. The HR image and the LR depth map may be compared to recognise one or more objects that the image and the depth map have in common. Whereas this is relatively straightforward when upscaling an LR image (which may include similar sized/shaped regions of colour as the HR image), the process may require some modification for the present use case of upscaling a depth map.

For example, features of objects may be extracted using a rate of change of one or more properties of the image or depth map (e.g. colour or depth distance) between pixels. In an image, the rate of change may be the colour of the pixels. A sudden change between colours (e.g. a colour difference above a predetermined threshold) may be used to identify the edge of an object. For the depth map, a rate of change may relate to the depth information (i.e. depth distance) of the pixels. If the depth information of one pixel indicates a first depth distance to the viewpoint, and then the next pixel indicates that a second depth distance to the viewpoint that differs from the first depth distance by more than a predetermined threshold, this may also be used to identify the edge of an object in the depth map.

After extracting features of one or more objects in the image and in the depth map, the spatial position of those features may be compared and matched together to spatially align the colour information in the image with the depth information of the depth map. This process is more easily performed if the HR image and the LR depth map correspond to the same image frame of the content, however spatial alignment is still possible within some allowable offset in examples where the HR image and the LR depth map correspond to different image frames of the content.

Since the HR image is higher resolution, the edges of the objects may be more clearly defined. This may be used to reconstruct an edge in the depth map by splitting the larger pixels of the LR depth map into smaller pixels and identifying, based on the corresponding pixels of the HR image, to which side of the edge of the object those pixels belong. Reconstructed depth information may then be generated for each of the new, smaller pixels in a HR depth map based on the surrounding depth information already present in the LR depth map.

It will be appreciated that any one or more of the aforementioned steps of reference-based super-resolution may be performed by a machine-learning model trained to e.g. identify features in the image or spatially align features between images.

It will also be appreciated that the present techniques do not necessarily need to use the specific process of reference-based super-resolution described above. In some examples, computer vision techniques such as image recognition and restoration may be used instead. For example, a machine-model may be trained, for example to generate HR depth maps based on HR images and the depth information provided in a LR depth map.

Accordingly, the upscaling processes defined above may be used to reconstruct a depth map that has a higher resolution, e.g. 3840x2160 pixels, than the LR depth map. Accordingly, a high-resolution (HR) depth map may be obtained. The HR depth map may then be used instead of the LR depth map, thereby leading to improved image quality in any subsequent image processing.

In particular examples, it will be appreciated that the upscaling process may be further improved when the image itself has a higher resolution than the LR depth map. Accordingly, detail that is not present in the LR depth map may be identified in the HR image and then inferred in the HR depth map.

As mentioned above, such subsequent use may include rendering one or more visual effects in the image of the scene based on the HR depth map, for example using the rendering unit 158 of the image processing device 150. The quality of some visual effects may be significantly improved by using depth information at higher resolution. Some visual effects may include: bloom, fog or smoke, simulated depth of field (i.e. to cause some parts of the object to be out of focus dependent on the depth information), shadows, etc. It will be appreciated that many other visual effects may be applied depending on the content.

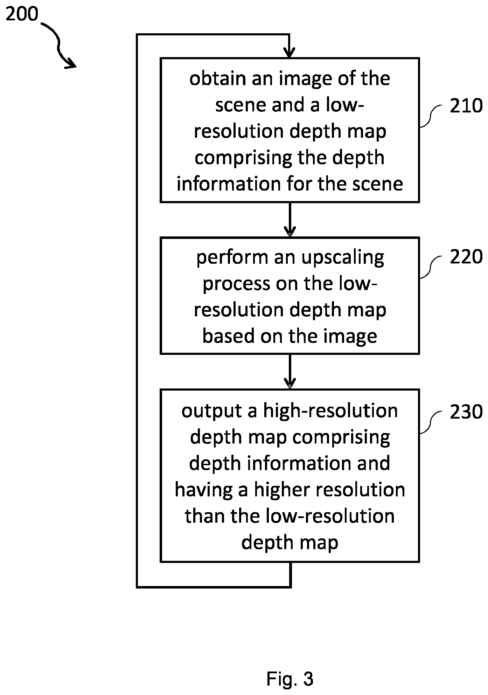

Figure 3 illustrates a sequence of steps 200 that may be performed by the image processing device 150 to implement the present techniques. At step 210, an image of the scene and a LR depth map comprising depth information for the scene is obtained. As above, this may be by generating the image and LR depth map locally on the image processing device 150, or by receiving them over a network from another image processing device. At step 220, an upscaling process on the LR depth map is performed based on the image. At step 230, the HR depth map comprising depth information and having a higher resolution than the LR depth map is output for subsequent use by the image processing device 150.

According to these techniques, a received LR depth map may be upscaled based on the image to produce a high quality HR depth map for use in image processing. As described above, the LR depth map may be obtained locally, e.g. from the frame generation unit 156, however, in other examples, the present techniques may also be applied to streaming content over a network. Accordingly, additional computational resources available in the cloud may be used to further enhance the upscaling of a depth map in a user's device.

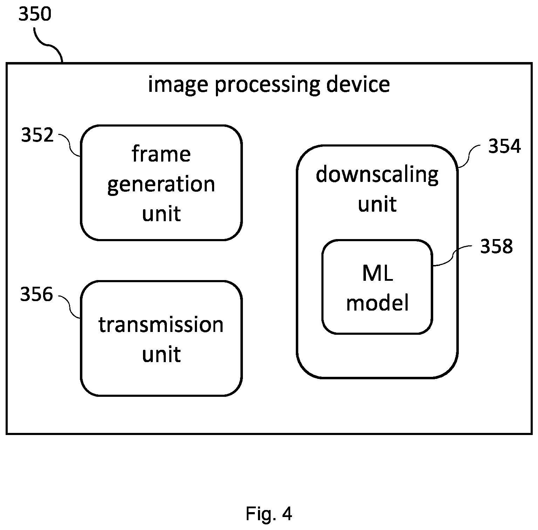

Figure 4 illustrates an image processing device 350 according to various embodiments described below. The image processing device 350 comprises several functional units which may be provided, for example by the CPU 20 and/or GPU 30 in the entertainment device 10. The image processing device 350 comprises a frame generation unit 352, configured to generate an image of a scene and a HR depth map comprising depth information for the scene. By generating the HR depth map in the cloud, more detailed depth information may be generated using the additional computational resources that are available.

Before transmission, the image processing device 350 uses a downscaling unit 354 to perform a downscaling process on the HR depth map to generate a LR depth map comprising the depth information and having a lower resolution than the HR depth map. This allows the depth information to be more easily transmitted over a network, i.e. because the file size may be reduced and hence use less bandwidth. The transmission unit 356 therefore transmits the LR depth map over a network to a user device such as the image processing device 150 in Figure 2.

In some examples, the downscaling unit 354 may implement a machine-learning (ML) model 358 for the downscaling, such as by selecting a downscaled resolution for the LR depth map in dependence on the depth information and the image. The use of the ML model may advantageously allow the down- and up- scaling processes to be trained in combination to maximise information recovery from the LR depth map. For this purpose, one or more example embodiments may use a reinforcement learning (RL) model. Reinforcement learning is a type of machine learning directed to training an artificial intelligence agent to take actions in an environment that maximize the notion of a cumulative reward. During reinforcement learning, the agent interacts with the environment, and learns from the results of its actions, thus allowing the agent to progressively improve its decision-making.

An RL model typically comprises an action-reward feedback loop. The feedback loop comprises: an environment, state, agent, policy, action, and reward. The environment is the system with which the agent interacts and in which the agent operates - for example, the environment may be a virtual environment of a game. The state represents the current conditions in the environment. The agent receives the state as an input and takes an action which may affect the environment and change the state of the environment. The agent takes the action based on its policy which is a mapping from states of the environment to actions of the agent. The policy may be deterministic or stochastic. The reward represents feedback from the environment to the action taken by the agent. The reward provides an indication (typically in the form of a numerical value) of the desirability of the result of the agent's action. The reward may comprise positive signals to reward desirable behaviour of the agent and/or negative signals to penalize undesirable behaviour of the agent.

In the example of the ML model 358 of the downscaling unit 354, the agent can learn by performing a downscaling process on a HR depth map using a selected downscaled resolution to generate a LR depth map. Then agent can then upscale the LR depth map as described above and compare the generated HR depth map for comparison to the original HR depth map. The rewards may then have positive rewards for lower downscaled resolutions and the without excessively losing detail of the depth information during the downscaling and upscaling processes. On the other hand, if the downscaled resolution is unnecessarily high, or if detail is lost in the downscaling, then the rewards may have negative rewards to penalize the agent.

Through multiple iterations of action-reward feedback loop, the agent aims to maximise the total cumulative reward it receives, thus learning how to take optimal actions in the environment. The reinforcement learning process thus allows the agent to learn an optimal policy that maximizes the cumulative reward. The cumulative award may be estimated using a value function which estimates the expected return starting from a given state or from a given state and action. Using the cumulative reward in the reinforcement learning process allows the agent to consider long-term effects of its policy.

A reinforcement learning algorithm may be used to refine the agent's policy and the value function over iterations of the action-reward feedback loop. The learning algorithm may rely on a model of the environment (e.g. based on Markov Decision Processes (MDPs)) or be model-free. Example suitable model-free reinforcement learning algorithms include Q-learning, SARSA (State-Action-Reward-State-Action), Deep Q-Networks (DQNs), or Deep Deterministic Policy Gradient (DDPG).

It will be appreciated that the agent will typically engage in both exploration and exploitation of the environment in which it operates. In exploration, the agent takes typically random actions to gather information about the environment and identify potentially desirable actions (i.e. actions that maximise cumulative reward). In exploitation, the agent takes actions that are expected to maximise reward (e.g. by selecting the action based on the agent's latest policy). Various techniques may be used to control the proportion of explorative and exploitative actions taken by the agent - for example, a predetermined probability of taking an explorative action in a given iteration of the feedback loop may be set (and optionally reduced over time to allow the agent to shifts more towards exploitation over time to maximise cumulative reward in view of diminishing returns for further exploration).

In some cases, the RL model may be configured to learn from feedback provided by a user. Utilising user feedback in this way may allow the agent to improve its choice of actions and better align with user preferences. For example, reinforcement learning from human feedback (RLHF) techniques may be used. RLHF includes training a reward model based on user feedback and using this model for determining the reward in the reinforcement learning process described above. The user feedback may be received in various forms depending on the specific reinforcement learning problem being solved - for example, the feedback may be received in the form of a user ranking of instances of the agent's actions such as by indicating the perceived image quality of the upscaled depth map. RLHF thus allows incorporating user feedback into the reinforcement learning process. RLHF approaches may be advantageous where it is easier for a user than for an algorithm to assess the quality of the machine learning model's output (e.g. for generative artificial intelligence RL models).

Accordingly, in such examples, the downscaled resolution may be selected so that the details of a HR depth map that is downscaled by the downscaling unit 354 can be recovered by the upscaling unit 154 while reducing the required bandwidth for transmitting the depth information. Hence, the streaming of content may be improved.

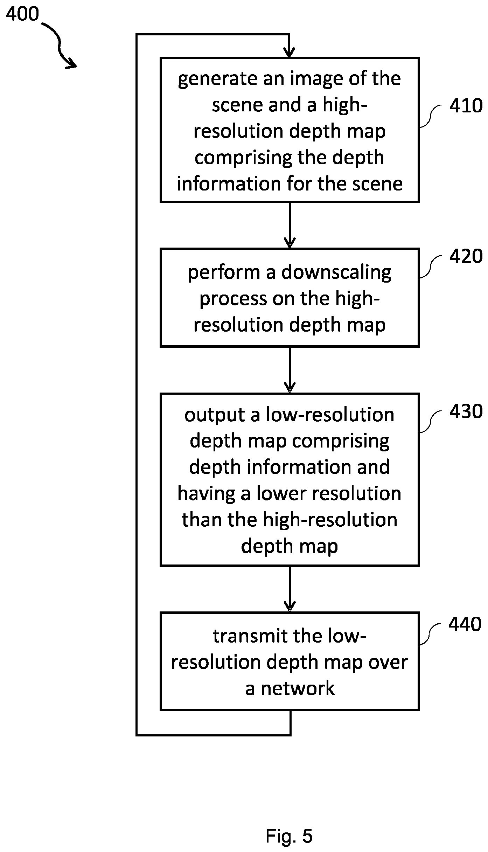

Figure 5 illustrates a sequence of steps 400 that may be performed by the image processing device 350 to implement the present techniques. At step 410, an image of the scene and a HR depth map comprising depth information for the scene is generated. At step 420, a downscaling process on the HR depth map is performed. As above, this may be performed using a downscaled resolution selected by a ML model 358. At step 430, the LR depth map comprising depth information and having a lower resolution than the HR depth map is output. The LR depth map is then transmitted over a network at step 440, to a user device such as image processing device 150.

In various examples, the depth map and the image may relate to the same image frame of the content. In such examples, the use of the image as a reference image may be more effective in the upscaling process, e.g. because various features of objects will be in the same position in the image. This however requires that both the depth map and the image have been obtained before the upscaling can occur, thereby reducing the possibility of parallelising the image processing. This is particularly so in examples where the image is generated and transmitted at a higher resolution, thereby incurring additional latency per frame.

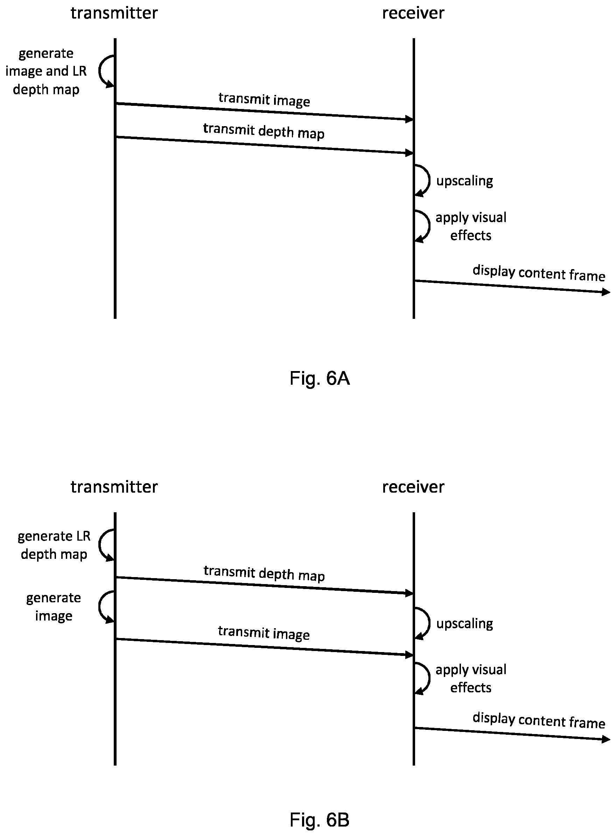

Figure 6A illustrates a signal diagram between a transmitter device (i.e. image processing device 350) and a receiver device (i.e. image processing device 150). At the transmitter 350, the image and LR depth map are generated. In this example, they both relate to the same image frame of the content being streamed. Both the image and LR depth map are then transmitted to the receiver 150. The receiver 150 may then perform the upscaling process on the LR depth map based on the image to generate the HR depth map as described above. Visual effects may be applied based on the HR depth map to render the frame of the content, which may then be displayed by a display device. As can be seen, this process limits the opportunities for parallelisation, but may perform the upscaling process more effectively due to the image and the LR depth map relating to the same frame.

In other examples, the upscaling process may use an image from a preceding content frame (e.g. the immediately preceding frame, or a previous frame). While the use of such an image as a guide for upscaling may be marginally less effective, it does introduce some opportunities to parallelise the present process, thereby reducing the latency associated with each frame of the image content.

Figure 6B illustrates a signal diagram between the transmitter 350 and receiver 150, but now where the upscaling process is based on an image from a preceding frame. The transmitter 350 generates the LR depth map and transmits it to the receiver 150. The transmitter 350 then generates the image related to the current frame. The receiver 150 then performs an upscaling process as above, based on the image from a preceding frame which has been retained. It can therefore be seen that the generation of the current frame's image and the upscaling process may be performed in parallel between the devices. Accordingly, if the image is generated at a higher resolution, the additional latency for the overall process is effectively reduced. After the image has been generated, the image may be transmitted. Visual effects may then be applied using the HR depth map before displaying the rendered content frame as described previously.

In yet further examples, the image content may be contained within a multi-channel image comprising one or more channels storing the LR depth map, and one or more channels storing the image of the scene. Each channel of the multi-channel image may comprise a predefined number of bits associated with each pixel of an image. For example, some channels may be associated with 24-bit RGB values, such that each of red, green and blue are represented by 8 bits each. These examples therefore may extend this by including additional bits to represent the depth information for each pixel. It will also be appreciated that channels for other types of data may also be included, e.g. luminance, chrominance, etc. Since each channel of the multi-channel image relates to each pixel of the image, it will also be appreciated that the depth map and the image will have the same (spatial) resolution.

In some examples of the transmitting device 350 described above, the frame generation unit 352 may generate a multi-channel image comprising one or more channels storing a HR depth map, and one or more channels storing a HR image of the scene. The multi-channel image may then be downscaled by the downscaling unit 354. Accordingly, the receiving device 150, in particular the reception unit 152, may obtain a multi-channel image comprising one or more channels storing the LR depth map, and one or more channels storing the image of the scene. The multi-channel image allows for more efficient streaming of the image content because the image and the depth map may be combined into one data file to be streamed, thereby allowing for a reduced bitrate compared to streaming the image and the depth map separately. After obtaining the multi-channel image, the upscaling unit 154 may then perform the upscaling process as described previously to obtain the HR depth map and a HR image. Thus, the efficiency of upscaling the image and depth map is also increased, as the image and depth map can be upscaled as part of a single upscaling process for the multi-channel image.

The upscaling process for the multi-channel image may, in some examples, use a preceding frame as a reference-image as described with reference to Figure 6B. Accordingly, the present advantageous of obtaining a depth map and an image of the content having a higher resolution can be realised while preventing the bandwidth required for streaming to be too large.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. An image processing device for upscaling depth information for an image, the image processing device comprising:
a reception unit configured to obtain:
an image of a scene; and
a low-resolution depth map comprising depth information for the scene; and
an upscaling unit configured to perform an upscaling process on the low-resolution depth map, based on the image, to generate a high-resolution depth map comprising depth information and having a higher resolution than the low-resolution depth map.

2. The image processing device of claim 1, wherein the image of the scene has a higher resolution than the low-resolution depth map.

3. The image processing device of claim 1 or claim 2, wherein the upscaling process comprises reference-based super-resolution using the image as a reference image.

4. The image processing device of any preceding claim, comprising a rendering unit configured to render one or more visual effects in the image of the scene based on the high-resolution depth map.

5. The image processing device of any preceding claim, comprising:
a frame generation unit configured to generate the low-resolution depth map and the image, wherein
the reception unit is configured to obtain the low-resolution depth map and the image from the frame generation unit.

6. The image processing device of any of claims 1 to 4, wherein the reception unit is configured to receive the low-resolution depth map and the image from a further image processing device over a network.

7. The image processing device of any preceding claim, wherein the image and the low-resolution depth map correspond to a same image frame for content.

8. The image processing device of any of claims 1 to 6, wherein the low-resolution depth map corresponds to a current image frame, and the image corresponds to a preceding image frame.

9. The image processing device of any of claims 1 to 6, wherein
the reception unit is configured to obtain a multi-channel image comprising one or more channels storing the low-resolution depth map, and one or more channels storing the image of the scene, and wherein
the upscaling unit is configured to perform the upscaling process on the multi-channel image.

10. An image processing method for upscaling depth information for an image, the method comprising:
obtaining:
an image of a scene; and
a low-resolution depth map comprising depth information for the scene; and
performing an upscaling process on the low-resolution depth map, based on the image, to generate a high-resolution depth map comprising depth information and having a higher resolution than the low-resolution depth map.

11. An image processing device for transmitting depth information for an image, the image processing device comprising:
a frame generation unit configured to generate:
an image of a scene; and
a high-resolution depth map comprising depth information for the scene;
a downscaling unit configured to perform a downscaling process on the high-resolution depth map to generate a low-resolution depth map comprising depth information and having a lower resolution than the high-resolution depth map; and
a transmission unit configured to transmit the low-resolution depth map and the image to a further image processing device over a network.

12. The image processing device of claim 11, wherein the downscaling unit comprises a machine learning model trained to select a downscaled resolution for the low-resolution depth map in dependence on the depth information and the image.

13. The image processing device of claim 11, wherein the machine learning model is trained to select the downscaled resolution to optimise a data size of the low-resolution depth map while preserving the depth information from the high-resolution depth map for recovery using a reference-based super-resolution process based on the image.

14. An image processing method for transmitting depth information of an image, the method comprising:
generating:
an image of a scene; and
a high-resolution depth map comprising depth information for the scene;
performing a downscaling process on the high-resolution depth map to generate a low-resolution depth map comprising depth information and having a lower resolution than the high-resolution depth map; and
transmitting the low-resolution depth map and the image over a network.

15. A computer program comprising computer executable instructions adapted to cause a computer system to perform the image processing method of claim 10 or claim 14.
